# EUROPÄISCHE PATENTANMELDUNG

(11) **EP 1 519 296 A1**
(43) Veröffentlichungstag der Anmeldung: **30.03.2005**
(21) Anmeldenummer: 03021075.1
(22) Anmeldetag: 18.09.2003
(51) Int. Cl.: G06K 7/00, G06K 13/00

(54) **Vorrichtung zur Herstellung einer Kommunikationsverbindung zu Karten unterschiedlichen Typs**

(71) Anmelder: SCHEIDT & BACHMANN GMBH, D-41238 Mönchengladbach (DE)
(72) Erfinder: Miller, Norbert, 41063 Mönchengladbach (DE); Cakmakli, Metin, 47918 Tönnisvorst (DE)
(74) Vertreter: Stenger, Watzke & Ring Patentanwälte

(57) **Zusammenfassung**

Die vorliegende Erfindung betrifft eine Vorrichtung zur Herstellung einer Kommunikationsverbindung zu Karten (10) mit unterschiedlichen Kartennutzungsfunktionen mit wenigstens zwei für unterschiedliche Kartennutzungsfunktionen geeigneten Steuereinheiten (16, 18), sowie ein Verfahren hierfür.

Es ist die Aufgabe der vorliegenden Erfindung, eine Vorrichtung sowie ein Verfahren zu schaffen, mittels dem kostengünstig eine Verwendung von unterschiedlichen Kartentypen ermöglicht wird und welches mit geringem Aufwand für neue Kartennutzungsfunktionen adaptierbar ist.

Als Lösung wird mit der Erfindung eine gattungsgemäße Vorrichtung vorgeschlagen, die eine für die unterschiedlichen Kartennutzungsfunktionen geeignete Leseeinheit (12) und einen mit der Leseeinheit (12) kommunikationstechnisch in Verbindung stehenden Multiplexer (24) aufweist, mittels dem die Kommunikationsverbindung zu der für die Kartennutzungsfunktion geeigneten Steuereinheit (16, 18) herstellbar ist.

## Beschreibung

Die vorliegende Erfindung betrifft eine Vorrichtung zur Herstellung einer Kommunikationsverbindung zu Karten mit unterschiedlichen Kartennutzungsfunktionen mit wenigstens zwei für unterschiedliche Kartennutzungsfunktionen geeigneten Steuereinheiten, sowie ein Verfahren hierfür.

Derartige Vorrichtungen sind in vielfältiger Weise bekannt, beispielsweise als Verkaufsautomaten, als Zugangsautomaten, Zeiterfassungensysteme oder dergleichen.

So ist es beispielsweise bekannt, den Zugang zu Gebäuden oder Grundstücken mit sicherheitsrelevanten Einrichtungen nur berechtigten Personen zu ermöglichen, indem diese mit Berechtigungsausweisen in Form von Magnetkarten, Chipkarten, Zeitkarten, Berechtigungskarten oder dergleichen versehen sind, die an einer Zugangsstelle manuell und/oder durch einen Automaten geprüft werden und bei positivem Prüfergebnis den Zugang gewähren. Ähnliche Einrichtungen sind auch beim Verlassen von Gebäuden und Grundstücken bekannt, bei denen es darauf ankommt, Schutzmaßnahmen beim Verlassen durchzuführen. Derartiges ist beispielsweise bei Kernkraftwerken vorgesehen, bei denen beim Verlassen des sicherheitsrelevanten Bereichs die Person auf Kontamination mit radioaktiven Stoffen untersucht wird.

Aber auch im täglichen Umfeld ist eine Vielzahl von Vorrichtungen bekannt, beispielsweise Verkaufsautomaten für Waren oder Dienstleistungen, die eine bargeldlose Zahlung ermöglichen. Solche Vorrichtungen sind beispielsweise Warenverkaufsautomaten, Fahrkartenautomaten, Getränkeautomaten und dergleichen. Um eine umständliche Abwicklung der Zahlungstransaktion zu vereinfachen, sind die Vorrichtungen anstelle oder zusätzlich zu einer Zahlungsmöglichkeit mit Bargeld mit einer Einheit versehen, die es ermöglicht, bargeldlos zu zahlen. So kann beispielsweise die Vorrichtung mit einer Einheit versehen sein, die eine Zahlungsmöglichkeit mittels einer der gängigen Kartentypen wie Kreditkarte, EC-cash, Geldkarte, Berechtigungskarten oder dergleichen schafft. All diese Kartentypen repräsentieren eine Vielzahl unterschiedlicher Kartennutzungsfunktionen.

Aus Sicht des Kunden bzw. des Benutzers ist es wünschenswert, daß die Vorrichtung eine Vielzahl von Zahlungsmöglichkeiten bereithält, so daß der Kunde einerseits die Wahlmöglichkeit hat, die für ihn günstigste Zahlungsmöglichkeit zu wählen, und darüber hinaus auch dann eine Zahlungstransaktion durchführen kann, wenn er nur über ein bestimmtes bargeldloses Zahlungsmittel verfügt. Ein Verkaufsautomat, welcher eine für dieses Zahlungsmittel geeignete Einheit nicht aufweist, weist einen erheblichen Wettbewerbsnachteil auf.

Aufgrund der bisher bekannten bargeldlosen Zahlungsmöglichkeiten ist es unter Umständen erforderlich, mehrere Einheiten zur Ausführung von Zahlungstransaktionen in einer Vorrichtung zu integrieren, wobei jede Einheit für eine spezielle Kartennutzungsfunktion vorgesehen ist. Eine Anordnung von mehreren Einheiten ist sehr kostenintensiv in der Herstellung, und darüber hinaus erfordert es einen hohen Zulassungsaufwand für die jeweilige Steuereinheit, die zur Kommunikation mit den vorgesehen Kartentypen vorgesehen sind.

Sind beispielsweise mehrere Öffnungen für verschiedene Zahlungsmittel wie Kreditkarten, EC-Karten oder dergleichen an einem Automaten vorhanden, besteht die Gefahr, daß der Benutzer des Automaten für die Zahlungstransaktion den falschen Eingabeschlitz für sein Zahlungsmittel verwendet. Die Folge ist ein Abbruch der Zahlungstransaktion. Der Benutzer muß nun alle Eingabeschritte bis zur Zahlungstransaktion wiederholen, sofern er noch an der Ware oder Dienstleistung interessiert ist. Manch ein Benutzer verzweifelt, insbesondere wenn der Abbruch mehrmals erfolgt, und verzichtet auf die weitere Benutzung des Automaten. Ferner erweist es sich als nachteilig, daß eine nachträgliche Einrichtung eines solchen Automaten für einen neuen Kartentyp einen hohen Aufwand erfordert, der einer Anschaffung eines neuen Automaten gleichkommt.

Auch im Bereich der Berechtigung zu einer Nutzung, beispielsweise einem Zugang, erweisen sich bekannte Verfahren als nachteilig oder sehr aufwendig und daher kostenintensiv. Unter Nutzung soll nicht nur die Benutzung von Gegenständen verstanden werden, sondern auch Zugangsberechtigungen, beispielsweise zu Gebäuden, Grundstücken oder dergleichen. So ist es z. B. wünschenswert, daß auf einer Baustelle nur berechtigtes Personal Zugang erlangt, welches die dort geplanten Tätigkeiten vornehmen soll. Unberechtigte Dritte sollen aus der Baustelle ferngehalten werden, beispielsweise um Unfälle zu vermeiden oder auch einen ungestörten Betriebsablauf zu ermöglichen. So können beispielsweise die Arbeiter mit einer Zugangskarte versehen werden, deren Prüfung an einer Zugangsstelle zur Baustelle den Zugang erlaubt. Nachteilig ist, daß das vorhandene System ausschließlich für einen speziellen, dafür vorgesehenen Kartentyp verwendet werden kann, so daß sichergestellt sein muß, daß die berechtigten Personen mit einer Zugangskartenart versehen sind. Darüber hinaus erweist sich ein solches System als unflexibel, da Veränderungen wie neue Berechtigungen oder deren Streichung einen hohen verwaltungstechnischen Aufwand erfordern.

Es ist daher die **Aufgabe** der vorliegenden Erfindung, eine Vorrichtung sowie ein Verfahren zu schaffen, mittels dem kostengünstig eine Verwendung von unterschiedlichen Kartentypen ermöglicht wird und welches mit geringem Aufwand für neue Kartennutzungsfunktionen adaptierbar ist.

Unter Kartentyp soll im Rahmen dieser Offenbarung jeder Kartentyp verstanden werden, der mit abfragbaren Informationen versehen sein kann, beispielsweise Magnetkarten, Chipkarten, Kreditkarten, Geldkarten, EC-Karten, Personalausweis, Führerschein, Stempelkarten, Zeitkarten oder dergleichen.

Als **Lösung** wird mit der Erfindung eine gattungsgemäße Vorrichtung vorgeschlagen, die eine für die unterschiedlichen Kartennutzungsfunktionen geeignete Leseeinheit und einen mit der Leseeinheit kommunikationstechnisch in Verbindung stehenden Multiplexer aufweist, mittels dem die Kommunikationsverbindung zu der für die Kartennutzungsfunktion geeigneten Steuereinheit herstellbar ist.

Erstmals ist es somit möglich, eine Vorrichtung für eine Vielzahl von unterschiedlichen Kartennutzungsfuntionen, insbesondere bargeldlosen Zahlungsmöglichkeiten, bereitzustellen, wobei der zusätzlich zu betreibende Aufwand gegenüber den bekannten Vorrichtungen des Stands der Technik gering ist. Die Anordnung eines Multiplexers, über den die für die Kartennutzungsfunktion zur Kommunikation geeignete Steuereinheit mit der Leseeinheit verbunden wird, ermöglicht eine einfache Bedienung bei geringem zusätzlichen Aufwand. Die Leseeinheit oder auch eine Rechnereinheit stellt fest, um welchen Kartentyp, beispielsweise bargeldloses Zahlungsmittel, es sich handelt und tritt über den Multiplexer mit der zuständigen Steuereinheit in Kommunikation, so daß ein vorgesehener Datenaustausch ausgeführt werden kann. Vorteilhaft können darüber hinaus bereits zugelassene Steuereinheiten verwendet werden, welche jeweils über den Multiplexer mit der Leseeinheit verbunden werden können. So kann z. B. für jedes Zahlungsmittel eine geeignete, bereits zugelassene Steuereinheit verwendet werden. Aufwendige Systeme mit unterschiedlichen Leseeinheiten und Öffnungen für die Ein- und/oder Ausgabe der Karte können vermieden werden. Darüber hinaus bietet die vorliegende Erfindung die Möglichkeit, ohne erheblichen Entwicklungs- und Kostenaufwand eine Vielzahl von Kartennutzungsfunktionen zuzulassen. Eine aufwendige Multifunktionssteuereinheit kann vermieden werden. Auch können bereits bestehende Vorrichtungen mit geringem Aufwand umgerüstet werden, beispielsweise indem neue Steuerheiten für weitere Kartennutzungsfuntionen hinzugefügt werden, oder auch indem eine Steuereinheit entfernt wird, wenn die zugehörige Kartennutzungsfunktion nicht mehr akzeptiert wird. Die erfindungsgemäße Vorrichtung ermöglicht die Verwendung von bereits zugelassenen Steuereinheiten, so daß der hohe Aufwand für die Zulassung einer neu entwickelten Multifunktionssteuereinheit eingespart werden kann.

Es wird ferner vorgeschlagen, daß die Vorichtung eine Rechnereinheit aufweist. Vorteilhaft können Daten der Karte gespeichert und/oder gelesen werden. Darüber hinaus kann eine Datenverarbeitung erreicht werden, um beispielsweise Transaktionen wie zur Zahlung ausführen zu können.

Es wird ferner vorgeschlagen, daß der Multiplexer einstückig mit der Leseeinheit ausgebildet ist. Aufwand für Montage und ein separates Gehäuse können eingespart werden.

Alternativ wird vorgeschlagen, daß der Multiplexer einstückig mit wenigstens einer der Steuereinheiten ausgebildet ist. In dieser Ausgestaltung kann erreicht werden, daß bereits bekannte Leseeinheiten für die Vorrichtung verwendet werden können.

In einer vorteilhaften Weiterbildung wird vorgeschlagen, daß die Leseeinheit als Schreib-/Leseeinheit ausgebildet ist. In dieser Ausgestaltung besteht die Möglichkeit, zusätzlich zum Lesen der Daten auch weitere Daten auf die Karte zu schreiben. So können beispielsweise bei Feststellung einer unberechtigten Benutzung der Karte entsprechende Daten auf der Karte gespeichert werden, um die weitere Verwendung dieser Karte zu sperren. Diese Daten können beispielsweise von der Rechnereinheit bereitgestellt werden.

In einer weiteren Ausgestaltung der vorliegenden Erfindung wird vorgeschlagen, daß zwischen der Rechnereinheit und einer Zentrale eine Kommunikationsverbindung herstellbar ist. So kann beispielsweise vor Ausführung einer Zahlungstransaktion die Karte auf ihre Gültigkeit überprüft werden, indem gelesene Daten über die Rechnereinheit an eine Zentrale übermittelt werden, die die Gültigkeit des Zahlungsmittels überprüft. Ein Ergebnis der Überprüfung durch die Zentrale wird an die Rechnereinheit übermittelt, die dann beispielsweise das Zahlungsmittel für eine Zahlungstransaktion freigeben kann. Andernfalls können entsprechende Daten über die Leseeinheit im Zahlungsmittel gespeichert werden, so daß diese für eine weitere Verwendung gesperrt wird. Die Gefahr eines Mißbrauchs eines Zahlungsmittels oder einer unberechtigten Benutzung einer Karte kann reduziert werden.

Es wird ferner vorgeschlagen, daß die Vorrichtung eine Eingabeeinheit aufweist. So können vorteilhaft Benutzereingaben wie beispielsweise die Auswahl einer Transaktionsart oder dergleichen eingegeben werden. Die Eingabeeinheit kann mit einer Steuereinheit verbunden sein oder auch einstückig mit dieser ausgebildet sein.

In einer weiteren Ausgestaltung wird vorgeschlagen, daß die Vorrichtung genau eine Eingabeöffnung aufweist. So kann vorteilhaft nur eine Öffnung für die Einund/oder Ausgabe der Karte vorgesehen sein, durch die alle vorgesehenen Kartentypen eingeführt werden können. Darüber hinaus kann eine Verwechselungsgefahr bei der Bedienung vermieden wird, da für alle Kartentypen nur eine Eingabeöffnung vorhanden ist.

Mit der Erfindung wird ferner ein Verfahren zum Herstellen einer Kommunikationsverbindung zu Karten mit unterschiedlichen Kartennutzungsfunktionen vorgeschlagen, wobei mittels einer für die unterschiedlichen Kartennutzungsfunktionen geeigneten Leseeinheit eine Kommunikationsverbindung zu einer Karte hergestellt wird, die Leseeinheit Daten von der Karte liest, aus den gelesenen Daten die zur Kommunikation mit der Karte für die Kartennutzungsfunktion geeignete Steuereinheit ermittelt und mittels eines Multiplexers die Kommunikationsverbindung zwischen der zur Kommunikation mit der Karte geeigneten Steuereinheit und der Karte über die Leseeinheit hergestellt wird. Eine benutzerfreundliche Bedienung der Vorrichtung kann erreicht werden. Darüber hinaus können Freigabeeinheiten für die Leseeinheiten, die bei mehreren Leseeinheiten eine Eingabe der Karte in die geeignete Leseeinheit ermöglichen sollen, eingespart werden. Beipielsweise kann durch Lesen eines Teils der Daten bereits ermittelt werden, welche Steuereinheit geeignet ist. Es kann aber auch vorgesehen sein, daß die Daten an den Multiplexer übermittelt werden, welcher dann die geeignete Steuereinheit ermittelt und eine Kommunikationsverbindung zu dieser herstellt. Es kann aber auch eine Dritte Einheit vorgesehen sein, welche nach Ermittlung der geeigneten Steuereinheit ein entsprechendes Signal an den Mulitplexer übermittelt.

Es wird weiterhin vorgeschlagen, daß die Leseeinheit mittels des Multiplexers über eine von wenigstens zwei Steuereinheiten mit einer Rechnereinheit kommuniziert.

Eine direkte Verbindung des Multiplexers zur Rechnereinheit kann vorteilhaft eingespart werden.

Darüber hinaus wird vorgeschlagen, daß die Daten an die Rechnereinheit übermittelt werden. So können vorteilhaft Daten bereitgestellt werden, die für die Erlangung einer Berechtigung erforderlich sind. Die Daten können an die zur Kommunikation für die Kartennutzungsfunktion der Karte geeigneten Steuereinheit zur weiteren Verarbeitung übermittelt werden. Die Daten können in der Rechnereinheit gespeichert werden und können darüber hinaus auch zur Verifikation der Berechtigung verwendet werden. Ferner können die Daten für statistische Zwecke verwendet werden.

In einer vorteilhaften Weiterbildung der vorliegenden Erfindung wird vorgeschlagen, daß durch die Rechnereinheit die für die Kartennutzungsfunktion der Karte zur Kommunikation mit der Karte geeignete Steuereinheit aktiviert wird. So können beispielsweise durch die Rechnereinheit zunächst die Kartennutzungsfunktion und die Gültigkeit der Karte bestimmt werden, wobei in Abhängigkeit des Ergebnisses die zur Kommunikation geeignete Steuereinheit aktiviert wird. Eine zuverlässige Abwicklung einer Erlangung der Berechtigung kann erreicht werden.

Es wird ferner vorgeschlagen, daß die Leseeinheit eine direkte Kommunikationsverbindung mit der für die Kartennutzungsfunktion der Karte zur Kommunikation geeigneten Steuereinheit herstellt. Eine schnelle Datenübertragung bei hoher Sicherheit und eine erhöhte Zuverlässigkeit kann erreicht werden.

Daneben wird vorgeschlagen, daß eine der Steuereinheiten mittels des Multiplexers eine Kommunikationsverbindung zwischen der Leseeinheit und der zur Kommunikation für die Kartennutzungsfunktion der Karte geeigneten Steuereinheit herstellt. Insbesondere bei einer einstückigen Ausführung des Multiplexers mit der Steuereinheit kann erreicht werden, daß eine beliebige Steuereinheit direkt mit der Leseeinheit in Kommunikationsverbindung gebracht wird, auch wenn die einstückig mit dem Multiplexer ausgeführte Steuereinheit nicht zur Kommunikation für die Kartennutzungsfunktion der Karte geeignet ist. Eine Reduzierung von Baueinheiten kann erreicht werden.

Es wird ferner vorgeschlagen, daß die aktivierte Steuereinheit eine direkte Kommunikationsverbindung mit der Leseeinheit herstellt. Es kann erreicht werden, daß unabhängig von der Art der Aktivierung der Steuereinheit diese selbsttätig eine direkte Kommunikationsverbindung zur Leseeinheit aufbaut.

Als Alternative wird vorgeschlagen, daß die Leseeinheit zur Kommunikation eine Kommunikationsverbindung zu der für die Kartennutzungsfunktion der Karte geeigneten Steuereinheit herstellt. In dieser Ausgestaltung erkennt die Leseeinheit in Abhängigkeit von der zugeführten Karte die Kartennutzungsfunktion und somit die Zuständigkeit einer bestimmten Steuereinheit, die dann automatisch aktiviert wird. Die Aktivierung kann beispielsweise erst nach Übermitteln von Daten an die Rechnereinheit vorgesehen sein. Eine einfache Ablaufhierarchie zur Ausführung des Verfahrens kann erreicht werden.

In einer vorteilhaften Weiterbildung der vorliegenden Erfindung wird vorgeschlagen, daß mit der Karte erlangbare Berechtigungen an eine Kommunikationseinheit ausgegeben werden. Die Kommunikationseinheit kann beispielsweise durch ein Tastenfeld und einen Bildschirm sowie auch durch ein Touch-Panel gebildet sein. Sobald feststeht, welcher Kartentyp vorliegt, können die mit dieser Karte möglichen Transaktionsarten an die Kommunikationseinheit ausgegeben werden, so daß dem Benutzer die Auswahlmöglichkeiten bereitgestellt werden.

Darüber hinaus wird vorgeschlagen, daß die Erlangung der Berechtigung durch die aktivierte Steuereinheit entsprechend einer der von dem Benutzer ausgewählten möglichen Berechtigungen ausgeführt wird. Vorteilhaft kann der Benutzer die für ihn günstigste Transaktionsart wählen. So können beispielsweise bei einer Zahlungstransaktion in Abhängigkeit von der ausgewählten Transaktionsart Boni und Skonti vorgesehen sein, in deren Genuß er durch Auswahl einer bestimmten Transaktionsart kommt. Es kann aber auch vorgesehen sein, daß das Zahlungsmittel nur als Sicherheit verwendet wird, und dem Benutzer eine Rechnung gestellt wird. Die Benutzerfreundlichkeit kann erhöht werden.

Ferner wird vorgeschlagen, daß als Karte eine Magnetkarte, eine Chip-Karte, eine Geldkarte, eine Zeitkarte, eine Ausweiskarte, eine EC-Karte oder eine Kreditkarte verwendet wird. Eine Vielzahl von unterschiedlichen Kartentypen können somit verwendet werden, ohne daß eine Multifunktionssteuereinheit zu entwickeln wäre. Es besteht keine Verwechslungsgefahr wie bei Anordnung mehreren Öffnungen, die jeweils für einen unterschiedlichen Kartentyp vorgesehen sind, daß die Karte in eine falsche Öffnung eingeführt wird. Besonders vorteilhaft ist dies für Verkaufsautomaten, Fahrscheinautomaten oder dergleichen, bei denen bargeldlos gezahlt werden kann.

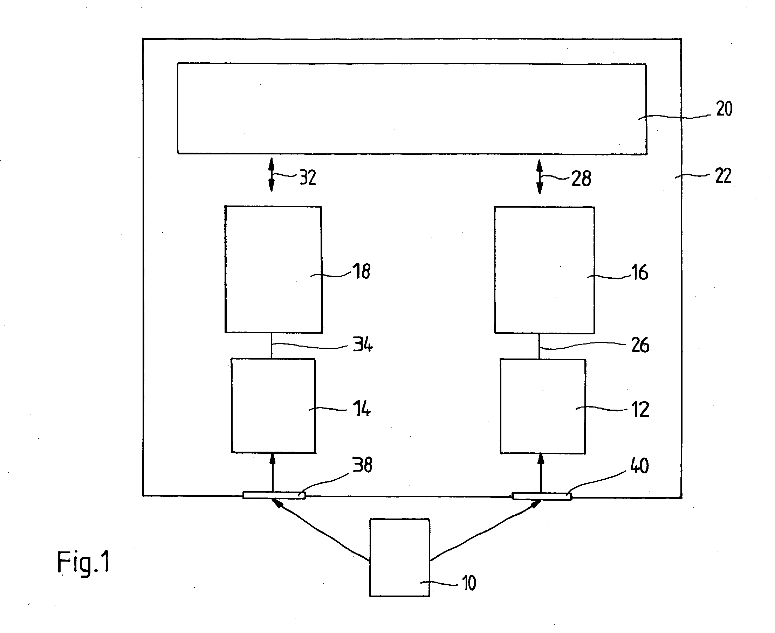

Weitere Vorteile und Merkmale sind der folgenden Beschreibung von Ausführungsbeispielen zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 1 verwiesen. Die Zeichnungen sind nur Schemazeichnungen und dienen nur der Erläuterung der folgenden Ausführungsbeispiele.

Es zeigen:
- Fig. 1: schematisch einen Aufbau einer Vorrichtung des Stands der Technik mit zwei getrennten Eingabeschlitzen,
- Fig. 2: eine erfindungsgemäße Ausgestaltung einer Vorrichtung mit einem Eingabeschlitz,
- Fig.3: einen erfindungsgemäßen, schematischen Ablaufplan für eine Zahlungstransaktion an einem Fahrscheinverkaufsautomaten,
- Fig. 4: einen erfindungsgemäßen Ablaufplan für eine Bezahlungstransaktion mit einer Geldkarte und
- Fig. 5: einen erfindungsgemäßen Ablaufplan zur Bezahlung mit einer Kreditkarte.

Fig. 1 zeigt eine Vorrichtung des Stands der Technik zur Ausführung einer bargeldlosen Zahlungstransaktion. Die Vorrichtung weist ein Gehäuse 22 auf, in welchem eine Rechnereinheit 20 sowie zwei Steuereinheiten 16, 18 und zwei Chipkartenleser 12, 14 angeordnet sind. Die Chip-Kartenleser 12, 14 sowie die Steuereinheiten 16, 18 sind jeweils nur zur Kommunikation für eine fest vorgegebene Kartennutzungsfunktion geeignet. Die Steuereinheiten 16, 18 sind vorzugsweise Standardsteuereinheiten, welche bereits für die vorgesehene Kartennutzungsfunktion zugelassen sind. Über Eingabeschlitze 38, 40 kann ein für eine bestimmte Steuereinheit vorgesehenes Zahlungsmittel dem mit der zugehörigen Steuereinheit 16, 18 verbundenen Chipkartenleser 12, 14 zugeführt werden. Die Chipkartenleser 12, 14 stehen über Kommunikationsverbindungen 26, 34 mit den zugehörigen Steuereinheiten 16, 18 in Kommunikationsverbindung. Die Steuereinheiten 16, 18 sind ihrerseits über Kommunikationsverbindungen 28, 32 mit der Rechnereinheit 20 in Kommunikationsverbindung. An dieser Stelle zeigt sich ein wesentlicher Nachteil des Stands der Technik, der durch die Mehrzahl an Eingabeschlitzen 38, 40 begründet ist. Der Benutzer entscheidet bereits mit der Einführung seines Zahlungsmittels in einen der Eingabeschlitze, welche der Steuereinheiten aktiviert wird. Wird das Zahlungsmittel irrtümlich in einen falschen Eingabeschlitz eingeführt, so veranlaßt die entsprechende Steuereinheit einen Abbruch der Zahlungstransaktion. Der Benutzer muß nunmehr alle vorher bereits ausgeführten Aktionen wiederholen, um dann die Zahlungstransaktion durch Einführung des Zahlungsmittels in den richtigen Eingabeschlitz 38, 40 auszuführen. Darüber hinaus ist für jede Steuereinheit ein Chipkartenleser erforderlich.

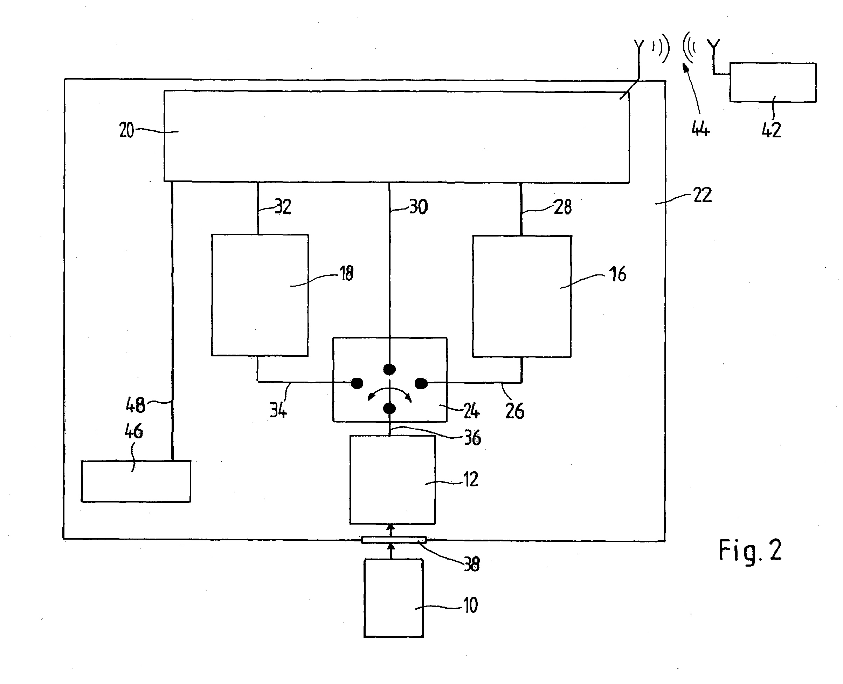

Dieses Problem tritt bei der erfindungsgemäßen Lösung gemäß Fig. 2 nicht auf. Die erfindungsgemäße Vorrichtung weist auch hier ein Gehäuse 22 auf, in welchem eine Rechnereinheit 20, zwei Steuereinheiten 16, 18 angeordnet sind, die jeweils zur Kommunikation für eine unterschiedliche Kartennutzungsfunktion der Karte 10 geeignet sind. Auch hier sind die Steuereinheite 16, 18 vorzugsweise Standardsteuereinheiten mit einer Zulassung für eine vorgegebene Kartennutzungsfunktion. Im Unterschied zum Stand der Technik weist diese Vorrichtung jedoch nur einen Chipkartenleser 12 auf, der über eine Kommunikationsverbindung 36 mit einem Multiplexer 24 verbunden ist.

Entsprechend weist das Gehäuse 22 nur eine Eingabeöffnung 38 auf, über die ein Zahlungsmittel 10 dem Chipkartenleser 12 zugeführt werden kann.

Der Multiplexer 24 ist weiter über Kommunikationsverbindungen 26, 30, 34 mit der Rechnereinheit 20 sowie mit den Steuereinheiten 16, 18 verbunden. Die Steuereinheiten 16, 18 ihrerseits sind über Kommunikationsverbindungen 28, 32 wiederum direkt mit der Rechnereinheit 20 verbunden. Der Multiplexer 24 stellt nun eine Umschaltfunktion bereit, mit der die Kommunikationsverbindung 36 wahlweise mit einer der Kommunikationsverbindungen 26, 30, 34 verbindbar ist.

In der vorliegenden Ausgestaltung stellt der Multiplexer 24 in seiner Ruhestellung eine Verbindung zwischen der Kommunikationsverbindung 30 und der Kommunikationsverbindung 36 her. In Abhängigkeit von den an die Rechnereinheit 20 übermittelten Daten des Zahlungsmittels 10 wird sodann der Multiplexer 24 über die Kommunikationsverbindung 30 in der Weise angesteuert, daß die Kommunikationsverbindung 36 mit der entsprechend zugehörigen Kommunikationsverbindung 26, 34 verbunden wird, um den Chipkartenleser 12 mit der für die Ausführung der Zahlungstransaktion geeigneten Steuereinheit 16, 18 zu verbinden.

Am Gehäuse 22 ist ferner ein Touch-Panel 46 angeordnet, welches über eine Kommunikationsverbindung 48 mit der Rechnereinheit 20 in Verbindung steht.

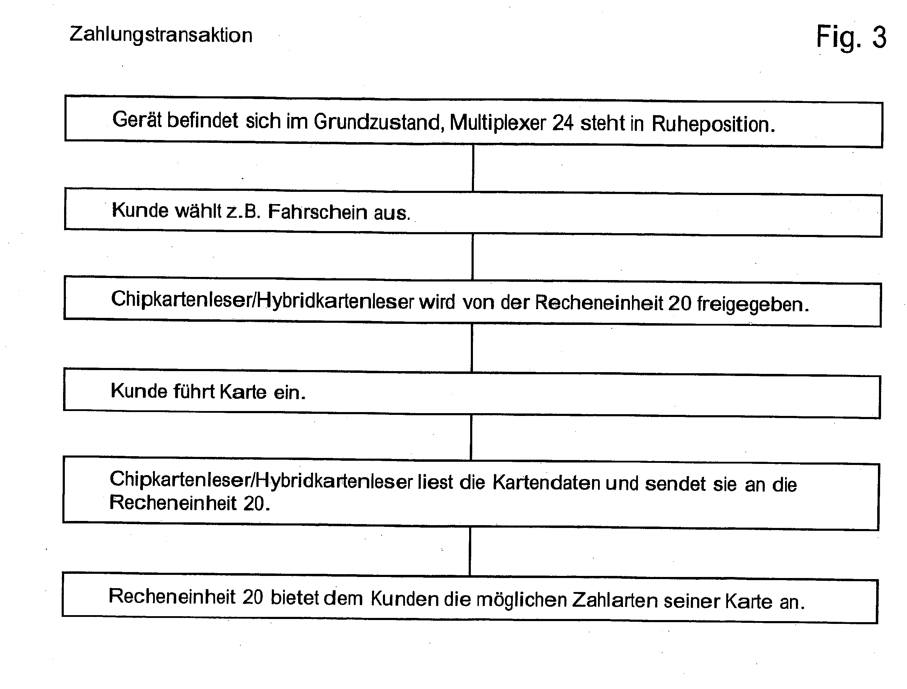

Ein Ablauf für eine Zahlungstransaktion kann dabei wie folgt vorgesehen sein (Fig. 3). An einem Point-Of-Sale (POS) wählt ein Benutzer eine Ware oder Dienstleistung aus, die er erwerben möchte, in diesem Fall ein Fahrschein für ein öffentliches Verkehrsmittel. Der POS steht über eine nicht näher bezeichnete Kommunikationsverbindung mit der Rechnereinheit 20 in Verbindung. Diese gibt den Chipkartenleser 12 frei. Zur Ausführung der Zahlungstransaktion führt nun der Benutzer sein Zahlungsmittel in den Eingabeschlitz 38 ein. Von hier wird das Zahlungsmittel 10 dem Chipkartenleser 12 zugeführt. Dieser liest die Daten aus dem Zahlungsmittel 10 aus und übermittelt diese über die Kommunikationsverbindungen 30, 36 an die Rechnereinheit 20. Die Rechnereinheit 20 ermittelt den Typ des Zahlungsmittels und gibt ein Signal an den Multiplexer 24 ab, welcher eine entsprechende Kommunikationsverbindung zu der entsprechenden Steuereinheit 16, 18 herstellt. Die Steuereinheit 16, 18 übermittelt ihrerseits die möglichen Zahlungstransaktionen, die das Zahlungsmittel erlaubt, über die Kommunikationsverbindungen 28, 32 an die Rechnereinheit. Die Rechnereinheit 20 übermittelt die möglichen Transaktionsarten über die Kommunikationsverbindung 48 an das Touch-Panel 46. Der Benutzer kann nun per Fingerdruck auf den entsprechenden Bereich des Touch-Panels die gewünschte Transaktionsart aktivieren. Beispielsweise kann bei einer EC-Karte ein Chip für eine Geldkarte vorgesehen sein. Ein entsprechender Geldbetrag kann entweder vom Chip der Geldkarte abgebucht oder auch per Bankeinzug über das EC-System eingezogen werden. Der Benutzer wählt die gewünschte Transaktionsart aus. Die ausgewählte Transaktionsart wird über die Rechnereinheit 20 wieder an die entsprechende Steuereinheit 16, 18 übermittelt. Diese initiiert die weitere Abwicklung der Zahlungstransaktion.

Fig. 3 zeigt einen entsprechenden Ablauf des erfindungsgemäßen Verfahrens für einen Fahrscheinautomaten. Ausgangszustand des Verfahrens ist, daß der Multiplexer 24 eine Kommunikationsverbindung zwischen der Rechnereinheit 20 und dem Chipkartenleser 12 herstellt. Diese Position bildet zugleich die Ruhestellung des Multiplexers 24, die er automatisch nach Beenden bzw. nach Abbruch einer Transaktion einnimmt. Der Kunde wählt einen gewünschten Fahrschein aus. Der diesem Fahrschein zugeordnete Geldbetrag wird von der Rechnereinheit 20 ermittelt. Die Rechnereinheit 20 gibt daraufhin die Leseeinheit 12 zum Empfang eines Zahlungsmittels 10 frei. Der Benutzer führt nun seine EC-Karte mit einem Geldkarten-Chip in den Schlitz 38 ein, von dem sie über ein nicht näher bezeichnetes Fördersystem der Leseeinheit 12 zugeführt wird. Im folgenden Schritt liest die Leseeinheit 12 die Daten des Zahlungsmittels 10 aus und übermittelt diese über den Multiplexer 24 an die Rechnereinheit 20. Die Rechnereinheit 20 übermittelt die möglichen Transaktionsarten an das Touch-Panel 46, welches diese zur Anzeige bringt. Der Benutzer kann nun durch Berühren des Bereichs, der die gewünschte Zahlungstransaktionsart darstellt, eine Auswahl aktivieren. Diese wird an die Rechnereinheit 20 übermittelt, woraufhin die entsprechende Steuereinheit 16, 18 aktiviert wird, um die Zahlungstransaktion in bekannter Weise auszuführen.

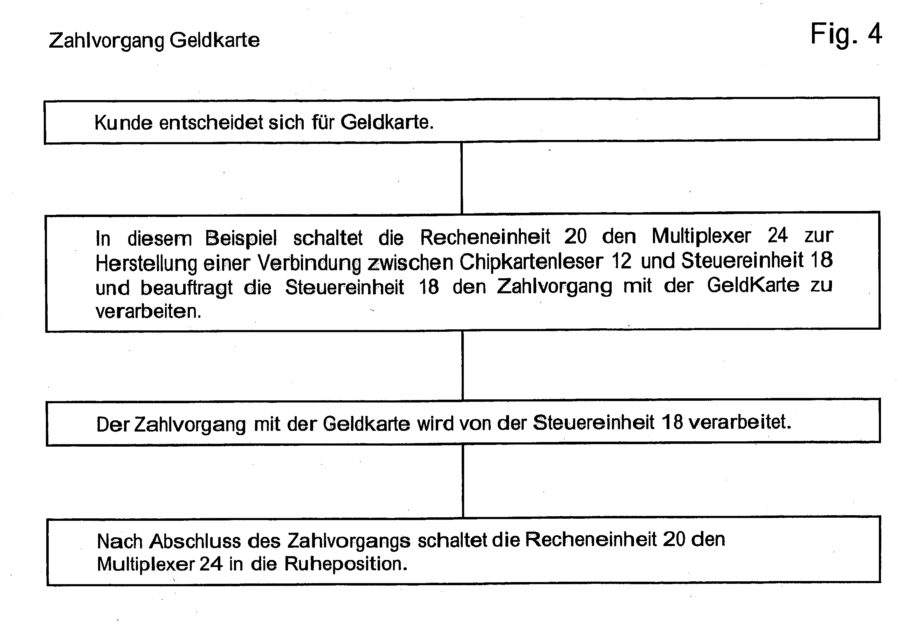

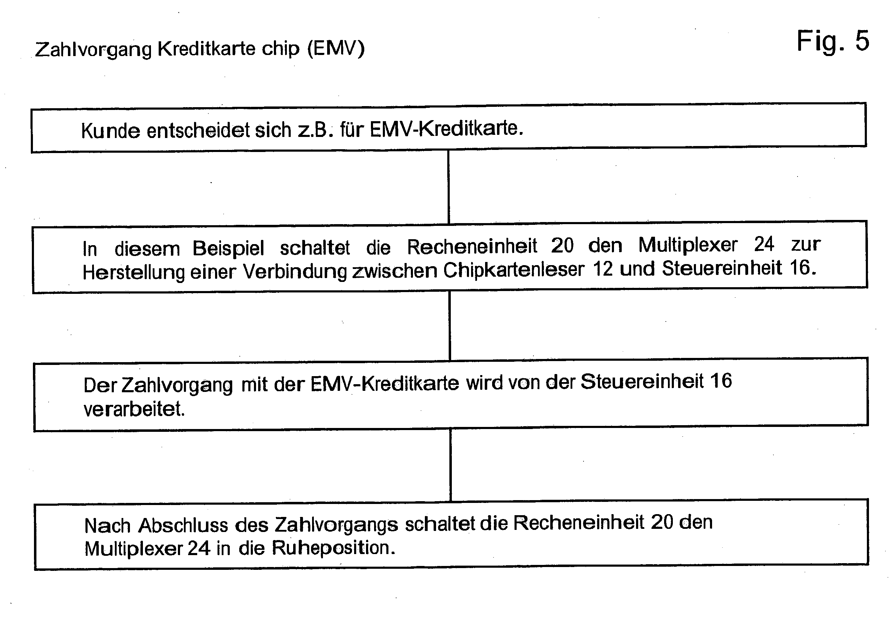

Fig. 4 zeigt einen konkretisierten Verfahrensablauf, bei dem die Steuereinheit 18 für die Verarbeitung einer Geldkarte vorgesehen ist. Gemäß dem in Fig. 4 dargestellten Verfahrensablauf entscheidet sich der Kunde für die Bezahlung mittels Geldkarte. Die Rechnereinheit veranlaßt nun den Multiplexer 24, eine Verbindung zwischen Leseeinheit 12 und Steuereinheit 18 herzustellen, damit der Zahlungsvorgang mittels Geldkarte verarbeitet werden kann. Nach Abschluß der Zahlungstransaktion schaltet die Rechnereinheit 20 den Multiplexer 24 auf seine Ruheposition. In einem alternativen Zahlungsvorgang entscheidet sich der Benutzer für die Zahlung mittels EMV-Kreditkarte. Der Benutzer trifft die entsprechende Auswahl durch Berühren des entsprechenden Bereichs des Touch-Panels 46. Die Rechnereinheit 20 veranlaßt den Multiplexer 24 eine Kommunikationsverbindung zwischen der Leseeinheit 12 und der entsprechend zugehörigen Steuereinheit 16 für eine Bezahlung mittels EMV-Kreditkarte herzustellen. Die Zahlungstransaktion mittels EMV-Kreditkarte wird von der Steuereinheit 16 verarbeitet. Nach Abschluß der Zahlungstransaktion veranlaßt die Rechnereinheit 20 den Multiplexer 24 wieder die Ruheposition einzunehmen (Fig. 5).

Mit der Erfindung kann somit erreicht werden, daß der Benutzer mit einem beliebigen Zahlungsmittel, für welches die Vorrichtung vorgesehen ist, eine Zahlungstransaktion ausführen kann. Es wird die Art des Zahlungsmittels ermittelt und gegebenenfalls eine entsprechende Auswahl von Zahlungstransaktionsarten, die mit diesem Zahlungsmittel möglich sind, angezeigt. Der Benutzer kann die gewünschte Zahlungstransaktionsart auswählen und es wird automatisch wunschgemäß die Transaktion ausgeführt.

Die in der Beschreibung und den zugehörigen Figuren dargestellten Ausführungsbeispiele dienen lediglich der Erläuterung der Erfindung und sind für diese nicht beschränkend. So können insbesondere Verfahrensschritte abgewandelt oder auch neu kombiniert werden oder vorrichtungsseitig weitere Funktionen vorgesehen sein, ohne den Schutzbereich dieser Erfindung zu verlassen. Auch ist die Erfindung nicht auf Abwicklung von Zahlungstransaktionen beschränkt. Sie kann auch bei Zugangssystemen oder dergleichen zum Einsatz kommen.

### Bezugszeichenliste

- 10: Kreditkarte
- 12: Leseeinheit
- 14: Leseeinheit
- 16: Steuereinheit
- 18: Steuereinheit
- 20: Rechnereinheit
- 22: Gehäuse
- 24: Multiplexer
- 26: Kommunikationsverbindung
- 28: Kommunikationsverbindung
- 30: Kommunikationsverbindung
- 32: Kommunikationsverbindung
- 34: Kommunikationsverbindung
- 36: Kommunikationsverbindung
- 38: Eingabeschlitz
- 40: Eingabeschlitz
- 42: Zentrale
- 44: Funkverbindung
- 46: Touch-Panel
- 48: Kommunikationsverbindung

## Patentansprüche

1. Vorrichtung zur Herstellung einer Kommunikationsverbindung zu Karten (10) mit unterschiedlichen Kartennutzungsfunktionen mit wenigstens zwei für unterschiedliche Kartennutzungsfunktionen geeigneten Steuereinheiten (16, 18),
**gekennzeichnet durch**
eine für die unterschiedlichen Kartennutzungsfunktionen geeignete Leseeinheit (12) und einen mit der Leseeinheit (12) kommunikationstechnisch in Verbindung stehenden Multiplexer (24), mittels dem die Kommunikationsverbindung zu der für die Kartennutzungsfunktion geeigneten Steuereinheit (16, 18) herstellbar ist.

2. Vorrichtung nach Anspruch 1, **gekennzeichnet durch** eine Rechnereinheit (20).

3. Vorrichtung nach Anspruch 1 oder 2, **dadurch gekennzeichnet, daß** der Multiplexer (24) einstückig mit der Leseeinheit (12) ausgebildet ist.

4. Vorrichtung nach Anspruch 1 oder 2, **dadurch gekennzeichnet, daß** der Multiplexer (24) einstückig mit wenigstens einer der Steuereinheiten (16, 18) ausgebildet ist.

5. Vorrichtung nach einem der Ansprüche 1 bis 4, **dadurch gekennzeichnet, daß** die Leseeinheit (12) als Schreib-/Leseeinheit ausgebildet ist.

6. Vorrichtung nach einem der Ansprüche 1 bis 5, **dadurch gekennzeichnet, daß** zwischen der Rechnereinheit (20) und einer Zentrale (42) eine Kommunikationsverbindung (44) herstellbar ist.

7. Vorrichtung nach einem der Ansprüche 1 bis 6, **gekennzeichnet durch** eine Eingabeeinheit (46).

8. Vorrichtung nach einem der Ansprüche 1 bis 7, **gekennzeichnet durch** genau eine Eingabeöffnung (38) für die Karte (10).

9. Verfahren zum Herstellen einer Kommunikationsverbindung zu Karten (10) mit unterschiedlichen Kartennutzungsfunktionen, wobei mittels einer für die unterschiedlichen Kartennutzungsfunktionen geeigneten Leseeinheit (12) eine Kommunikationsverbindung zu einer Karte (10) hergestellt wird, die Leseeinheit (12) Daten von der Karte (10) liest, aus den gelesenen Daten die zur Kommunikation mit der Karte (10) für die Kartennutzungsfunktion geeignete Steuereinheit (16, 18) ermittelt und mittels eines Multiplexers (24) die Kommunikationsverbindung zwischen der zur Kommunikation mit der Karte (10) geeigneten Steuereinheit (16, 18) und der Karte (10) über die Leseeinheit (12) hergestellt wird.

10. Verfahren nach Anspruch 9, **dadurch gekennzeichnet, daß** die Leseeinheit (12) mittels des Multiplexers (24) über eine von wenigstens zwei Steuereinheiten (16, 18) mit einer Rechnereinheit (20) kommuniziert.

11. Verfahren nach Anspruch 9 oder 10, **dadurch gekennzeichnet, daß** die Daten an die Rechnereinheit (20) übermittelt werden.

12. Verfahren nach einem der Ansprüche 9 bis 11, **dadurch gekennzeichnet, daß** durch die Rechnereinheit (20) die für die Kartennutzungsfunktion der Karte (10) zur Kommunikation mit der Karte geeignete Steuereinheit (16, 18) aktiviert wird.

13. Verfahren nach einem der Ansprüche 9 bis 12, **dadurch gekennzeichnet, daß** die Leseeinheit (12) eine direkte Kommunikationsverbindung (26, 34) mit der für die Kartennutzungsfunktion der Karte (10) zur Kommunikation geeigneten Steuereinheit (16, 18) herstellt.

14. Verfahren nach einem der Ansprüche 9 bis 12, **dadurch gekennzeichnet, daß** eine der Steuereinheiten (16, 18) mittels des Multiplexers (24) eine Kommunikationsverbindung (26, 34) zwischen der Leseeinheit (12) und der zur Kommunikation für die Kartennutzungsfunktion der Karte (10) geeigneten Steuereinheit (16, 18) herstellt.

15. Verfahren nach einem der Ansprüche 9 bis 12, **dadurch gekennzeichnet, daß** die aktivierte Steuereinheit (16, 18) eine direkte Kommunikationsverbindung (26, 34) mit der Leseeinheit (12) herstellt.

16. Verfahren nach einem der Ansprüche 9 bis 12, **dadurch gekennzeichnet, daß** die Leseeinheit (12) zur Kommunikation eine Kommunikationsverbindung (26, 34) zu der für die Kartennutzungsfunktion der Karte (10) geeigneten Steuereinheit (16, 18) herstellt.

17. Verfahren nach einem der Ansprüche 9 bis 16, **dadurch gekennzeichnet, daß** die Erlangung der Berechtigung durch die aktivierte Steuereinheit (16, 18) entsprechend einer der von einem Benutzer ausgewählten möglichen Berechtigungen ausgeführt wird.

18. Verfahren nach einem der Ansprüche 9 bis 17, **dadurch gekennzeichnet, daß** als Karte eine Magnetkarte, eine Chip-Karte, eine Geldkarte, eine Zeitkarte, eine Ausweiskarte, eine EC-Karte oder eine Kreditkarte verwendet wird.
